(19) Europäisches Patentamt
European Patent Office
Office européen des brevets

(11) Publication number: 0 347 768 A2

(12) EUROPEAN PATENT APPLICATION

(21) Application number: 89110955.5

(51) Int. Cl.4: C08G 61/08

(22) Date of filing: 16.06.89

(30) Priority: 17.06.88 US 207805
15.05.89 US 351507

(43) Date of publication of application:
27.12.89 Bulletin 89/52

(84) Designated Contracting States:
BE DE FR GB IT SE

(71) Applicant: THE B.F. GOODRICH COMPANY
3925 Embassy Parkway
Akron Ohio 44313-1799(US)

(72) Inventor: Minchak, Robert John
11954 Woodview Boulevard
Parma Heights Ohio 44130(US)
Inventor: McIntosh, Lester Howard, III
2981 Reservoir Drive
Mogadore Ohio 44260(US)

(74) Representative: von Kreisler, Alek, Dipl.-Chem. et al
Patentanwälte Von Kreisler-Selting-Werner
Deichmannhaus am Hauptbahnhof
D-5000 Köln 1(DE)

# (54) Polymerization with ring-opening cocatalyst.

(57) Preparation of polymers of norbornene-type monomers is accomplished by conducting ring-opening polymerization in presence of a catalyst selected from molybdenum and tungsten compounds, a cocatalyst selected from organometals and organometal hydrides, and a halogen source. In a preferred embodiment, the catalyst is halogen-free and is selected from organoammonium molybdates and tungstates, the cocatalyst is selected from trialkylmetal hydrides and tetraalkylmetals containing 1 to 6 carbons in each alkyl group, and the halogen source is selected from alkylhalogensilanes and halogensilanes devoid of alkyl groups.

EP 0 347 768 A2

# POLYMERIZATION WITH RING-OPENING COCATALYST

## Reference to Related Application

This application is continuation-in-part of application S.N. 207,805 filed June 17, 1988, and entitled "Cycloolefin Polymerization With Metathesis Catalyst System".

## Background of the Invention

Preparation of norbornene-type monomers is well known. Dicyclopentadiene can be made by dimerizing cyclopentadiene by the Diels-Alder reaction whereas dihydrodicyclopentadiene can be made by the Diels-Alder reaction of cyclopentadiene and cyclopentene. Norbornenes can also be prepared by the Diels-Alder reaction of cyclopentadiene with selected olefins to yield either norbornene or substituted norbornenes. Tetracyclododecene compounds are by-products formed from the Diels-Alder reaction of cyclopentadiene and norbornenes. Symmetrical and unsymmetrical trimers and tetramers of cyclopentadiene can, likewise, be prepared by the Diels-Alder reaction of cyclopentadiene.

Polymeric materials prepared from monomers containing norbornene moiety, i.e. cyclic olefins, can be made as elastomers, which are flexible at room temperature, or as plastics, which can be rigid at room temperature. They can be calendered and thermoformed to make rigid automotive and other products.

Polymers of cyclic olefins can be prepared in a known way by ring opening polymerization of the olefins in the presence of a metathesis catalyst comprising at least one alkylaluminum halide cocatalyst and at least one tungsten or molybdenum compound catalyst, preferably tungsten or molybdenum halide. This is accomplished by means of a solution or slurry polymerization technique by mixing the cyclic olefins with a hydrocarbon solvent and charging the mixture to a reactor. A molecular weight modifier selected from nonconjugated acyclic olefins is then added to the reactor followed by an alkylaluminum halide cocatalyst and at least one metathesis catalyst such as tungsten or molybdenum compound, that can serve as a catalyst. The catalyst can be added as a solution in an alkylester of a saturated carboxylic acid. The polymerization reaction can be conducted at about 0°C to 200°C, preferably 25°C to 100°C, with stirring and produces little heat. The reaction time to completion is short, i.e., on the order of less than two hours, and the reaction products are smooth, viscous materials comprising a polymer dispersed in a solvent. The reaction is shortstopped by addition of an alcohol, such as ethanol.

Polymeric products can also be made by solution or slurry polymerization where the polymeric product is not soluble in the reaction medium, in which case, the polymer is dispersed in a liquid medium which is a non-solvent for the polymer.

In bulk polymerization and reaction injection molding, process design is formulated on the principle of storing a monomer and a catalyst in one tank and a monomer and cocatalyst in another tank. The streams from respective tanks are mixed, as in an impingement mixer, and the mixture is conveyed to a mold where polymerization is initiated and carried out. There may be more than two tanks.

U.S. patent 4,380,617 discloses organoammonium molybdate and tungstate catalysts which are soluble in hydrocarbon solvents and the norbornene-type monomer or monomers which are polymerized therewith in the presence of a suitable cocatalyst. These catalysts are also stable in air and in the presence of moisture. The organoammonium molybdates and tungstates are also totally inactive in the presence of a cycloolefin or a mixture thereof so that polymerization is initiated only after the catalyst contacts a cocatalyst, as in a preheated mold.

Various cocatalysts have been used in the past in conjunction with a metathesis catalyst to polymerize one or a mixture of cycloolefins. Such cocatalysts are generally one or more alkylaluminum halide or trialkylaluminum compounds. Although aluminum is the preferred reducing agent in such cocatalysts, other organometallic reducing agents can function acceptably. Metals that form suitable organometallic cocatalysts include lithium, magnesium, boron, lead, zinc, tin, silicon, and germanium. Also, metallic hydrides can be used in whole or in part for the organometallic cocatalysts.

The metathesis cocatalysts that were used in the past with metathesis catalysts are selected from monoalkylaluminum dihalides $RAlX_2$, dialkylaluminum monohalides $R_2AlX$, aluminum sesquihalides $R_3Al_2X_3$, trialkylaluminum $R_3Al$, aluminum trihalides, and mixtures thereof. In the formulas for the metathesis cocatalysts, R is an alkyl radical containing 1 to 12 carbon atoms, preferably 2 to 4; and X is a halogen

selected from chlorine, bromine, iodine, and fluorine, particularly chlorine.

Specific examples of the prior art cocatalysts include ethylaluminum dichloride, diethylaluminum monochloride, ethylaluminum sesquichloride, diethylaluminum iodide, ethylaluminum diiodide, trialkylaluminum with elemental iodine, propylaluminum dichloride, propylaluminum diiodide, isobutylaluminum dichloride, ethylaluminum dibromide, methylaluminum sesquichloride, and methylaluminum sesquibromide.

In bulk polymerization to high conversion or in reaction injection molding, the alkylalkoxy or alkylaryloxyaluminum chlorides are outstanding cocatalysts, as disclosed in U.S. patent 4,426,502. These cocatalysts allow for pot life at room temperature.

The alkylaluminum halide and alkylaluminum cocatalysts of the prior art are very reactive with air and moisture in the atmosphere. In presence of air or more specifically, oxygen in the air or in the presence of moisture, these prior art cocatalysts quickly form oxides and alkoxides losing their reactivity partially or completely, thus losing their ability to behave as cocatalysts.

European published patent application 222,432, discloses bulk polymerization of dicyclopentadiene by means of a catalyst system which includes a tungsten compound and a trialkyltin compound. The tin compound or cocatalyst in this catalyst system is said to be stable in air and in the presence of moisture. The tungsten compound is defined by the following structural formula:

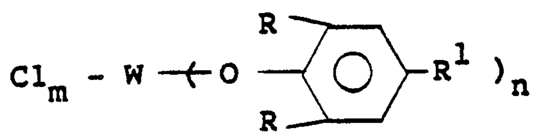

where R is an alkyl group containing at least 3 carbon atoms or a hydrogen, provided that at least one R group is alkyl; $R^1$ is hydrogen or an alkyl group of 1 to 10 carbon atoms; m + n is 6; and n is 1 or 2.

At bottom of p. 3 of the European application, it is disclosed that tetrabutyltin, tetramethyltin, and tetraethyltin, together with the above tungsten compound, did not work, i.e., did not polymerize dicyclopentadiene.

European application 222,432 issued as U.S. patent 4,729,976.

The Oreshkin et al article in European Polymer Journal, 13 (1977) on pp 447-450, reports the use of silane compounds as cocatalysts with molybdenum and tungsten catalysts in ring opening polymerization. Many of the silane compounds noted by the prior art article were tried in ring opening polymerization, however, where rapid polymerization is required, it has since been determined in our laboratories that it is necessary to also include an organoaluminum reducing agent in order to carry out the ring opening polymerization.

## Summary of the Invention

This invention relates to bulk polymerization of at least one norbornene-type monomer in the presence of a ring-opening catalyst system and a halogen source. Such a catalyst system comprises a ring-opening catalyst component and an organometal compound cocatalyst. The invention herein also relates to a ring-opening catalyst system containing an organometal compound and a halogen source. In a preferred embodiment, the catalyst system herein comprises an organoammonium tungstate or molybdate catalyst, an organometal compound cocatalyst, and a halogen source in the respective weight ratio of 1:1-10:0.2-5. All of the components can be used in a norbornene-type monomer or a mixture thereof.

## Detailed Description of the Invention

This invention pertains to ring opening polymerization of one or a mixture of norbornene-type monomers in the presence of a ring-opening catalyst, an organometal compound cocatalyst, and a halogen source. Some of the products of this invention are colorless and can be transparent.

The catalyst system herein is a metathesis catalyst system comprising a catalyst and a cocatalyst. In a preferred embodiment, the catalyst system herein comprises an organoammonium molybdate or tungstate catalyst devoid of halogen and phosphorus, and an organometal cocatalyst. Certain of the organometal

cocatalyst components are insensitive to atmosphere and can be used to conduct polymerization in absence of a nitrogen blanket to prevent deterioration thereof. Although some of the organometal cocatalysts may react with air and moisture, they do so much slower than the corresponding alkylaluminum halide cocatalysts of the prior art. The metathesis catalysts herein include tungsten compound catalysts which are devoid of a halogen and/or a phenoxy structure, especially hindered phenoxy structure.

The metathesis catalyst component, or a mixture thereof, is used at a level of 0.01 to 50 millimoles of molybdenum or tungsten in the catalyst per mol of total monomer, preferably 0.1 to 10 millimoles. The molar ratio of the organometal cocatalyst to the catalyst component is in the range of 200:1 or more to 1:10, preferably 10:1 to 2:1 of the metal to molybdenum or tungsten in the catalyst. Mol ratio of the halogen source to the catalyst is 20:1 to 1:4, preferably 5:1 to 1:1, of the halogen, preferably chlorine, to molybdenum or tungsten in the catalyst.

The cocatalysts suitable herein are selected from halogen-free organometal compounds wherein the metal is selected from tin, lead, silicon, lithium, magnesium, antimony, boron, zinc, and germanium. Such cocatalysts can contain one or more hydrogens, preferably 1 to 2, and the organo group is selected from alkyl, alkenyl, alkoxy, aryl, aryloxy, alkaryl, and saturated and unsaturated cyclic groups. In a preferred embodiment, the organo group of the cocatalysts is selected from alkyl and phenyl groups containing 1 to 14, preferably 1 to 6 carbon atoms, and the cocatalysts contain 1 to 2 hydrogens in their structure.

Generally speaking, the metathesis cocatalysts of this invention are defined by the following formula:

$R_xM_yH_z$

where R is an organic group that contains 1 to 14 carbon atoms, preferably 1 to 6, and is selected from alkyl, alkenyl, alkoxy, aryl, aryloxy, alkaryl, and saturated and unsaturated cyclic groups but preferably alkyl and phenyl groups; M is a metal selected from tin, lead, silicon, lithium, magnesium, boron, zinc, and germanium but preferably from Group IVA of the periodic Table, especially tin, lead, and silicon; H is hydrogen; x is 1 to 6, preferably 3 or 4; y is 1 or 2, preferably 1; and z is 0 to 3, preferably 0 or 1. Those tin, lead and silicon compounds which are air-insensitive are especially preferred because precautions need not be made when handling these compounds in air.

Polymerization with an $R_3SnH$ organometal cocatalyst with a molybdenum compound catalyst begins immediately at room temperature.

A short induction time was observed with a cocatalyst $R_3SnH$ with a tungsten compound catalyst, such as organoammonium tungstate. Polymerization with these cocatalysts commences at room temperature in about 5 minutes to one hour to exotherm and in about 1/2 minute to exotherm at mold temperature of 60-80°C with conversions of 94% having been attained.

With $R_4Pb$ cocatalyst and a molybdenum compound catalyst, such as an organoammonium molybdate, conversions of 97% and higher can be achieved . The system with $R_4Pb$ cocatalyst and an organoammonium tungstate has a much longer induction time and a slower rate of reaction than with the organoammonium molybdate catalyst. In terms of induction time and rate, the system of $R_4Pb$/Mo performs about the same as the system $R_3SnH$/W.

The polymerization system with $R_4Sn$ cocatalyst and a molybdenum compound catalyst, such as an organoammonium molybdate, does not yield polymers on standing for 3-4 days. However, polymer formation is rapid at mold temperature of 80°C and above with either fresh catalyst or catalyst aged for 3-4 days at room temperature. In addition, at mold temperature, the time reaction exotherm depends on the cocatalyst concentration. Delay of about one hour to exotherm can be obtained by using a smaller amount of the cocatalyst in the system. For short delays to polymerizations, such as two minutes or less to exotherm, one should increase amount of the cocatalyst several times.

Very little or no polymer is produced in a system where the cocatalyst is $R_4Sn$ and the catalyst is an organoammonium tungstate.

The metathesis catalyst system of $R_3SiH$ cocatalyst and molybdenum compound catalyst, such as an organoammonium molybdate, initiates polymerization of a norbornene-type monomer or a mixture thereof, but such polymerization does not continue to high conversion. This aspect is similar to the system of $R_3SnH$/Mo.

The system of $R_4Si$ cocatalyst with an organoammonium molybdate catalyst was kept in a bottle overnight at above 100°C to polymerize a norbornene-type monomer or a mixture thereof to a conversion level of about 93% and above.

In an important embodiment disclosed herein, the cocatalyst is selected from trialkyltin hydride compounds defined by the following structural formula:

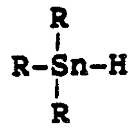

where the R groups are individually selected from alkyl groups of 1 to 10 carbon atoms and phenyl groups. The trialkyltin compounds tried are liquids at room temperature or give solutions in the norbornene-type monomers. Specific examples of suitable trialkyltin hydride compounds include tributyltin hydride, triphenyltin hydride, trimethyltin hydride, triethyltin hydride, and tripropyltin hydride. The trialkyltin hydrides are more fully disclosed in the European patent application 222,342 published May 20, 1987, which application is incorporated as if fully set forth herein.

The criterion for the cocatalysts herein is their solubility in the monomer or monomers which are to be polymerized and their relative insensitivity to oxygen and moisture. Between 0.1 and 100 millimoles, preferably between 0.2 and 50, of the metal in cocatalyst is used per mole of monomer(s).

Suitable halogen source herein is any halogen compound which can provide sufficient halogen for polymerization of one or more norbornene-type monomers in the presence of the metathesis catalyst system disclosed herein. Such halogen source is generally selected from non-aluminum metal halides where the metal is selected from tin, antimony, germanium, and silicon. Depending on the valence of the metal, the compound suitable herein as a halogen source can contain a full complement of a halogen or it can contain a lesser number of halogen atoms, in which case, the remaining valence or valences are satisfied by a group selected from hydrogen, alkyl and alkoxy groups containing 1 to 6 carbon atoms, and phenyl and alkylphenyl groups containing 6 to 14 carbon atoms.

Examples of a suitable halogen source are chlorosilanes selected from dimethylmonochlorosilane, dimethyldichlorosilane, diphenyldichlorosilane, tetrachlorosilane, and the like. Tetrachlorosilane is particularly preferred.

The metathesis catalyst component, or a mixture thereof, contemplated herein, includes all operable metathesis catalyst components which can polymerize a norbornene-type monomer, or a mixture thereof, by ring opening of the norbornene group at the double bond thereof. Such metathesis catalysts include molybdenum and tungsten compounds and the halides and oxyhalides thereof; heteropolymolybdates and heteropolytungstates disclosed in U.S. patent applications S.N. 312,150, filed February 21, 1989; and organoammonium molybdates and tungstates. Presently, the organoammonium molybdate and tungstate catalysts are preferred. The organoammonium tungstate metathesis catalysts herein are non-cyclic and contain no hindered phenolic groups.

Suitable organoammonium molybdates and tungstates are selected from those defined as follows:

$[R_4N]_{(2y-6x)}M_xO_y$ and $[R^1_3\ NH]_{(2y-6x)}M_xO_y$

where O represents oxygen; M represents either molybdenum (Mo) or tungsten (W); x and y represent the number of M and O atoms in the molecule based on the valence of +6 for molybdenum, +6 for tungsten and -2 for oxygen; and the R and $R^1$ radicals can be same or different and are selected from hydrogen, alkyl and alkylene groups each containing from 1 to 20 carbon atoms, and cycloaliphatic groupss each containing from 5 to 16 carbon atoms. All of the R and $R^1$ radicals cannot be hydrogens or be small in the number of carbon atoms since such a condition will render the molecule essentially insoluble in hydrocarbons and most organic solvents. In a preferred embodiment, the R radicals are selected from alkyl groups each containing 1 to 18 carbon atoms wherein the sum of carbon atoms on all the R radicals is from 20 to 72, more preferably from 25 to 48. In a preferred embodiment, the $R^1$ radicals are selected from alkyl groups each containing from 1 to 18 carbon atoms wherein the sum of carbon atoms on all of the $R^1$ radicals is from 15 to 54, more preferably from 21 to 42. The tungstate catalysts produce unfilled polymers which have less color than the molybdate catalysts. In some instances, the tungstate catalysts produce polymers which are substantially clear. Both the molybdate nd tungstate catalysts produce transparent unfilled polymers.

Specific examples of suitable organoammonium molybdates and tungstates described herein include tridodecylammonium molybdates and tungstates, methyltricaprylammonium molybdates and tungstates, tri-(tridecyl)ammonium molybdates and tungstates, and trioctylammonium molybdates and tungstates.

The organoammonium molybdates and tungstates are more fully disclosed in USP 4,380,617 which is incorporated as if fully set forth herein.

The norbornene-type monomers or cycloolefins that can be polymerized in accordance with the process described herein are characterized by the presence of the norbornene group, defined structurally by the following formula:

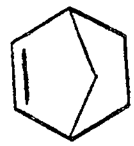

Pursuant to this definition, suitable norbornene-type monomers include substituted and unsubstituted norbornenes, alkylenenorbornenes, dicyclopentadienes, dihydrodicyclopentadienes, trimers and tetramers of cyclopentadiene, and tetracyclododecenes. This includes polar and nonpolar substituents on these monomers.

The polar substituents on the norbornene-type monomers include the groups of anhydrides, nitriles, acrylates and methacrylates, acetates, halogens, hydroxyls, carboxyls, carbonyls, and the like. Preferably, substituents on the norbornene-type monomers are independently selected from hydrogen, alkyl groups of 1 to 20 carbon atoms, and aryl and alkaryl groups of 6-14 carbon atoms, and saturated and unsaturated hydrocarbon cyclic groups formed by the substituents together with the two ring carbon atoms connected thereto containing 4 to 7 carbon atoms. In a more preferred embodiment, the substituents are independently selected from hydrogen, alkyl groups of 1 to 3 carbon atoms, and monounsaturated hydrocarbon cyclic groups containing 5 carbon atoms, the cyclic group being formed by the substituents as well as by the two carbon atoms on the norbornene-type monomer. Examples of monomers referred to herein include dicyclopentadiene, methyltetracyclododecene, 5-ethylidene-2-norbornene, 5-vinyl-2-norbornene, 2-norbornene and other norbornene monomers such as 5-methyl-2-norbornene, 5-phenyl-2-norbornene, ethylidenetetracyclododecene, 5,6-dimethyl-2-norbornene, 5-ethyl-2-norbornene, 5-butyl-2-norbornene, 5-hexyl-2-norbornene, 5-octyl-2-norbornene, and 5-dodecyl-2-norbornene.

This invention especially contemplates preparation of homopolymers, copolymers and terpolymers of 5-methyl-2-norbornene, trimers and tetramers of cyclopentadiene, 5-ethylidene-2-norbornene, 5-vinyl-2-norbornene, tetracyclododecene, hexacycloheptadecene, methyltetracyclododecene and dicyclopentadiene. This invention particularly contemplates preparation of homopolymers of dicyclopentadiene, methyltetracyclododecene and copolymers of dicyclopentadiene, methyltetracyclododecene, trimers of cyclopentadiene, 5-ethylidene-2-norbornene, ethylidenetetracyclodododecene, 5-vinyl-2-norbornene, and 5-methyl-2-norbornene. The copolymers are polymerized from monomer mixtures containing from 1 to 99%, preferably at least 5%, by weight of each monomer. The copolymers are generally defined as polymers of two or more monomers.

In bulk polymerization, such as reaction injection molding or liquid injection molding of one or more of the norbornene-type monomers, organoammonium molybdate and/or tungstate catalyst is dissolved in a norbornene-type monomer or a mixture thereof and kept in one tank whereas the organometal compound cocatalyst is dissolved in the norbornene-type monomer or a mixture thereof and kept in another tank. Other components such as the halogen source can also be included in another tank. The halogen source can be admixed and kept in the tank with the cocatalyst or with the catalyst. Or, the catalyst and the cocatalyst can be combined in one tank and the halogen source kept in another tank. Streams from the separate tanks containing catalyst system components and norbornene-type monomer or a mixture thereof are then mixed and injected into a mold where polymerization takes place to produce a thermosetting polymeric product. The mold can be maintained preheated if a thermally initiated system is devised although the mold can be maintained at ambient conditions and the polymerization reaction can be initiated at ambient temperature when catalyst and cocatalyst are brought into contact with each other.

By addition of certain comonomers, glass transition temperature of the norbornene-type polymers can be raised. Included herein are substituted norbornenes which contain polar functional groups, such as esters of carboxylic acids, and also norbornene derivatives which are nonpolar hydrocarbons and which are devoid of polar functional groups.

Certain of the cocatalysts disclosed herein have the effect of imparting a light color and substantial transparency to the resulting cross-linked or thermoset polymers. The products herein have haze of less than 25%, preferably less than 5%. Haze is expressed in terms of tristimulus values measured in accordance with ASTM method D1003. Haze is the percentage of diffusely transmitted light and is measured as the ratio of diffuse transmittance to total transmittance.

Various additives can be included to modify the properties of cycloolefin polymers of the invention. Possible additives include fillers, flame retardants, reinforcing fibers, pigments, antioxidants, light stabilizers, plasticizers and impact modifiers. The additives must be incorporated before the monomer charge sets up in the mold. It is often desirable that the additives be combined with one or more of the reactant streams

before being injected into the mold. Fillers or fibers with dimensional stability can be charged to the mold cavity, prior to charging the reaction streams, if the fillers or fibers are such that the reaction stream can readily flow around them to fill the remaining void space in the mold. It is essential that the additives not adversely affect catalytic activity.

In order to further illustrate the invention described herein, the following examples are presented that demonstrate certain aspects of the invention herein in greater detail. It is to be understood, however, that the examples are presented for illustrative purposes and not in any sense that would limit the scope of the invention herein, the scope of which is defined by the appended claims.

## Example I

In bottles A and B, herein, a 99% dicyclopentadiene (DCPD) was used, along with 0.74 molar tributyltin hydride solution in DCPD, 0.1 N tridodecycloammonium octamolybdate catalyst in 92.5/7.5 DCPD/ENB monomer mixture, and 0.25 molar silicon tetrachloride in 92.5/7.5 DCPD/ENB monomer mixture. The catalyst and the cocatalyst solutions in monomer are stable indefinitely and do not initiate polymerization of the monomer(s). The mixture of catalyst solution with the alkyltin hydride cocatalyst, likewise, does not initiate polymerization. The antioxidant (AO) was 4-butyl-2,6-di-t-butyl phenol. The contraction ENB represents 5-ethylidene-2-norbornene. The bottles were prepared and results were obtained, as indicated below:

| | Bottle A | Bottle B |
|---|---|---|
| DCPD (99%) | 40 ml (37.60g) | 40 ml (38.48g) |
| AO | 0.5 ml (0.41g) | 0.5 ml (0.47g) |
| $Bu_3SnH$ soln. | 0.8 ml (0.79g) | 0.5 ml (0.54g) |
| $SiCl_4$ soln. | - | 1.0 ml (0.98g) |
| Catalyst soln. | 1.0 ml (0.96g) | 1.0 ml (0.96g) |
| Color | no color | green |

Bottle A did not show any evidence of polymerization due to the absence of a halogen source, however, bottle B showed color change and became viscous shortly after addition of the $Bu_3SnH$ cocatalyst solution at room temperature. Conversion in bottle B was estimated to be about 90%, which high conversion is required for reaction injection molding.

The reactants in bottle B were mixed at room temperature and the reaction was initiated also at room temperature. It should be understood that at an elevated temperature of 50-100°C, the reaction rate would be accelerated giving a rigid RIM product in 1-3 minutes.

The color determinations were made visually.

## Example II

This example demonstrates the metathesis catalyst system of an $R_3SnH$ cocatalyst with an organoammonium tungsten catalyst with a halogen source. The cocatalyst was tributyltin hydride used in the form of 0.74 molar solution in dicyclopentadiene (DCPD). The monomer was a 92.5/7.5 blend of DCPD and 5-ethylidene-2-norbornene (ENB). The catalyst was tridodecylammonium decatungstate used in the form of a 0.1N solution in the 92.5/7.5 DCPD/ENB blend. The halogen source was tetrachlorosilane ($SiCl_4$) which is liquid and was used in the form of a 0.25 molar solution in the 92.5/7.5 DCPD/ENB blend. The antioxidant was 4-butyl-2,6-di-t-butylphenol. The mold measured 6"x6"x1/4" and is referred to as the 1/4-inch mold.

In carrying out the procedure of this experiment, all ingredients were mixed in a bottle at room temperature and then quickly injected into a mold where polymerization was carried out at elevated temperature. The finished thermosetting polymer in the form of a plaque was then removed from the mold.

Added to the bottle with shaking were 160 grams of 92.5/7.5 blend of DCPD and ENB, 4 milliliters (ml) of the $SiCl_4$ solution or 1.0 millimoles (mM) of $SiCl_4$, 4 ml of the tributyltin hydride solution or 3 mM of tin, 4 ml of the organoammonium tungstate solution or 0.4 mM of tungsten, and 1.6 grams of the antioxidant. The contents of the bottle were then poured into the mold which was maintained at 94°C. In one minute, an exotherm to 204°C developed which quickly subsided. The plaque was removed from the mold and

analyzed for monomer conversion. The conversion was 90%.

Additional experiments were carried out in like manner with tributyltin hydride cocatalyst and the organoammonium tungstate catalyst which gave the following results:

| Exp. No. | 92.5/7.5 DCPD/ENB (grams) | $SnCl_4$ (mM) | Sn (mM) | W Cat. (mM) | Mold Used | Mold Temp. °C. | Exotherm (min.) | Peak Temp. °C. | Conv. % |
|---|---|---|---|---|---|---|---|---|---|
| II-2 | 160 | 1.0 | 3.0 | 0.4 | 1/4 | 62 | 2.5 | 204 | 92 |
| II-3 | 160 | 1.0 | 3.0 | 0.4 | 1/4 | 24 | 19 hrs. | None | 87 |
| II-4 | 160 | 1.7 | 5.2 | 0.7 | 1/4 | 63 | 1.2 | 180 | 83 |
| II-5 | 200 | 1.25 | 1.8 | 0.5 | 1/8 | 76 | 0.44 | 170 | 93 |
| II-6 | 200 | 1.25 | 0.9 | 0.5 | 1/8 | 74 | 0.5 | 161 | 89 |
| II-7 | 200 | 1.25 | 1.8 | 0.25 | 1/8 | 73 | 0.72 | 160 | 90 |
| II-8 | 200 | 2.5 | 1.8 | 0.5 | 1/8 | 70 | 0.5 | 172 | 94 |

The 1/8-inch mold had dimensions of 8"x10"x1/8". All of the above experiments were carried out with 1% of the antioxidant which was also added to the bottle.

## Example III

This example demonstrates the metathesis catalyst system of $R_4Pb$ cocatalyst and an organoammonium molybdate catalyst with a halogen source. The cocatalyst was tetramethyllead used in the form of a 0.74 molar solution in DCPD. The catalyst used was 0.1N tridodecylammonium octamolybdate in the 92.5/7.5 DCPD/ENB blend. The monomer was a 92.5/7.5 blend of DCPD and ENB. The halogen source was $SiCl_4$ used in the form of a 0.25 molar solution in the 92.5/7.5 DCPD/ENB blend. The antioxidant was 4-butyl-2,6-di-t-butylphenol. The mold measured 8"x8"c1/8" and is referred to as the 1/8-inch mold.

The procedure in this experiment was to mix all ingredients in a bottle and then pour contents of the bottle into a mold where polymerization took place at an elevated temperature above room temperature.

Added to the bottle with shaking were 200 grams of the 92.5/7.5 DCPD/ENB blend, 5 ml of the halogen source solution or 1.25 mM of $SiCl_4$, 1.0 ml of the tetramethyllead cocatalyst or 0.5 mM of lead, and 5 ml of the molybdate catalyst solution or 0.5 mM molybdenum. The contents of the bottle were then poured into a mold which was maintained at 90°C. An exotherm developed in 1.0 minute and the temperature quickly rose to 166°C and then quickly subsided. A mold plaque was removed from the mold which had 82% conversion.

Additional experiments were carried out in like manner and with 1% of the antioxidant using the same mold, with the following results:

| Exp. No. | 92.5/7.5 DCPD/ENB (grams) | $SnCl_4$ (mM) | Pb (mM) | Mo Cat. (mM) | Mold Temp. °C. | Exotherm (min.) | Peak Temp. °C. | Conv. % |
|---|---|---|---|---|---|---|---|---|
| III-2 | 200 | 1.25 | 2.5 | 0.5 | 95 | 0.75 | 158 | 88 |
| III-3 | 200 | 1.25 | 1.25 | 0.5 | 70 | 1.0 | 175 | 91 |
| III-4 | 200 | 1.25 | 1.25 | 0.25 | 74 | 0.7 | 183 | 90 |
| III-5 | 200 | 2.5 | 1.25 | 0.5 | 76 | 0.35 | 182 | 94 |
| III-6 | 200 | 2.5 | 1.25 | 0.5 | 56 | 0.75 | 172 | 96, 97 |
| III-7 | 200 | 2.5 | 1.25 | 0.5 | 46 | 1.25 | 169 | 96 |
| III-8 | 200 | 2.5 | 1.25 | 0.5 | 61 | 0.45 | 187 | 97 |

## Example IV

This example demonstrates the metathesis catalyst system of $R_4Sn$ cocatalyst and an organoammonium molybdate catalyst, with a halogen source. The cocatalyst was tetraethyltin used in the form of a 0.5 molar solution in the 92.5/7.5 DCPD/ENB blend. The catalyst was 0.1N solution of tridodecylammonium octamolybdate in the 92.5/7.5 weight ratio DCPD/ENB blend. The halogen source was $SiCl_4$ used as a 0.25 molar solution in the 92.5/7.5 DCPD/ENB blend. The antioxidant was 4-butyl-2,6-di-t-butylphenol. The mold measured 6"x6"x1/4" and is referred to as the 1/4-inch mold.

pursuant to the procedure, all ingredients were mixed in a bottle and then poured into the 1/4-inch mold where polymerization took place and where the thermosetting polymeric plaque was formed.

Added to the bottle with shaking were 80 grams of the 92.5/7.5 DCPD/ENB blend, 2 ml of the $SiO_4$ halogen source solution or 0.5 mM of $SiCl_4$, 2 ml of tetraethyltin or 1 mM of tin, 2 ml of the catalyst solution or 0.2 mM of molybdenum, and 0.8 gram of the antioxidant. The contents of the bottle were then poured into the 1/4-inch mold which was maintained at 90°C. In 17 minutes an exotherm to 180°C quickly developed and then quickly subsided, indicating initiation and completion of the ring opening polymerization to a thermosetting polymeric plaque. The plaque was then removed from the mold and analyzed for monomer conversion. The conversion was determined to be 90%.

Additional experiments were carried out in like manner. All experiments herein also included 1% of the antioxidant which was also added to the bottle. Results of the additional experiments are summarized below:

| Exp. No. | 92.5/7.5 DCPD/ENB (grams) | $SnCl_4$ (mM) | Sn (mM) | Mo Cat. (mM) | Mold Used | Mold Temp. °C. | Exotherm (min.) | Peak Temp. °C. | Conv. % |
|---|---|---|---|---|---|---|---|---|---|
| IV-2 | 80 | 0.5 | 5 | 0.2 | 1/4 | 85 | 5 | 190 | 91 |
| IV-3 | 160 | 1.0 | 10 | 0.4 | 1/4 | 85 | 3 | 210 | 91 |
| IV-4 | 160 | 1.0 | 2 | 0.4 | 1/8 | 95 | 10 | 152 | 93 |
| IV-5 | 160 | 1.0 | 1 | 0.4 | 1/4 | 95 | 20 | 176 | 89 |
| IV-6 | 160 | 1.0 | 2 | 0.4 | 1/4 | 95 | 60 | 122 | 89 |
| IV-7 | 160 | 1.0 | 18 | 0.4 | 1/4 | 93 | 4.2 | 200+ | 86 |
| IV-8 | 160 | 1.0 | 9 | 0.4 | 1/4 | 90 | 5.5 | 200 | 89 |
| IV-9 | 200 | 1.25 | 12.6 | 0.5 | 1/8 | 88 | 7.0 | 174 | 90 |
| IV-10 | 200 | 1.25 | 6.3 | 0.5 | 1/8 | 87 | 14 | 136 | 93 |
| IV-11 | 200 | 1.25 | 3.0 | 0.5 | 1/8 | 88 | 20 | 116 | 87 |
| IV-12 | 200 | 2.5 | 5.9 | 0.5 | 1/8 | 81 | 12 | 170 | 97 |

Experiments IV-2 to IV-5 were performed with tetraethyltin cocatalysts whereas the remainder of the experiments were performed with tetrabutyltin cocatalysts. The 1/8-inch mold measured 8"x8"x1/8". In experiments IV-2, IV-3, IV-7, IV-8, IV-9, IV-10 and IV-11, the cocatalyst was added neat whereas in experiments IV-4, IV-5 and IV-6, the cocatalysts were added as 0.5 molar solutions in the 92.5/7.5 DCPD/ENB monomer blend.

On the basis of the above results, it is apparent that concentration of the cocatalyst determines the length of the exotherm. More of cocatalyst reduces the length of time to the exotherm.

## Example V

This example demonstrates the metathesis catalyst system of $R_4Si$ cocatalyst and an organoammonium molybdate catalyst, with a halogen source. The cocatalyst here was tetramethylsilane in the form of a 0.5 molar solution in the 92.5/7.5 DCPD/ENB monomer blend. The catalyst was tridodecylammonium octamolybdate in the form of 0.1N in the 92.5/7.5 DCPD/ENB blend. The $SiCl_4$ halogen source was in the form of a 0.25 molar solution in the 92.5/7.5 DCPD/ENB blend. The antioxidant was 4-butyl-2,6-di-t-butylphenol, which is liquid at room temperature.

The procedure involved mixing the ingredients in the bottle at room temperature and allowing the contents to set-up in the bottle.

Added to the bottle with shaking were 40 grams of the 92.5/7.5 DCPD/ENB monomer blend, 1 ml of the tetramethyl silane cocatalyst or 0.5 mM of silicon, 1 ml of tridodecylammonium octamolybdate catalyst or 0.1 mM of molybdenum, 1 ml of the halogen source or 0.25 mM of $SiCl_4$, and 0.4 grams of the antioxidant.

The bottle was kept open overnight and then in the morning it was heated to 140°C whereby contents set-up indicating conversion of in excess of 80%.

### Example VI

This experiment demonstrates the $R_3SiH/Mo$ metathesis catalyst system using triethylsilane hydride cocatalyst, with other ingredients and amounts thereof identical to those in Ex. V.

Conducting the polymerization in a bottle, conversion in excess of 80% was obtained.

### Example VII

This experiment demonstrates the $R_3SiH/W$ metathesis catalyst system. The cocatalyst here was triethylsilane, used in the form of 0.5 molar solution in the 92.5/7.5 DCPD/ENB blend. The catalyst was tridodecyl ammonium decatungstate in the form of a 0.1N solution in the 92.5/7.5 DCPD/ENB blend. The antioxidant was 4-butyl-2,6-di-t-butylphenol.

The procedure involved adding all ingredients to the bottle with shaking and breaking the bottle after contents thereof were set-up to determine conversion.

Added to the bottle were 40 grams of the 92.5/7.5 DCPD/ENB monomer blend, 0.4 gram of the antioxidant, 4 mls of the cocatalyst which amounted to 2 mM of silicon, 1 ml of the tungsten compound catalyst or 0.1 mM of tungsten, and 1 ml of $SiCl_4$ or 0.25 mM of $SiCl_4$. The contents of the bottle polymerized at 120°C and the crosslinked polymer had monomer conversion of 95%.

## Claims

1. Process for preparing a polymer by ring opening polymerization comprising the step of polymerizing a charge comprising a norbornene-type monomer, or a mixture thereof, in the presence of a sufficient amount of a ring-opening catalyst system and also in the presence of a sufficient amount of a halogen source, or a mixture thereof; wherein said norbornene-type monomer contains at least one norbornene group having the following structure

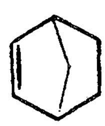

wherein said metathesis catalyst system comprises a catalyst and cocatalyst; wherein said catalyst is selected from molybdenum compounds, tungsten compounds devoid of a hindered phenoxy group, and mixtures thereof; wherein said cocatalyst is selected from organometal compounds where each of said organic groups contains 1 to 14 carbon atoms, and said metal is selected from tin, lead, silicon, lithium, magnesium, boron, zinc, germanium, and mixtures thereof; and wherein said halogen source is selected from halogen compounds containing sufficient amount of halogen to carry out said polymerization.

2. Process of claim 1 wherein said cocatalyst is selected from organometal compounds having the following structure:

$R_xM_yH_z$

where R is an organic group that contains 1 to 14 carbon atoms and is selected from alkyl, alkenyl, alkoxy, aryl, aryloxy, alkaryl, and saturated and unsaturated cyclic groups, said R is individually selected if there is more than one R group; M is a metal selected from tin, lead, silicon, lithium, magnesium, boron, zinc, germanium, and mixtures thereof; H is hydrogen; x is 1 to 6; y is 1 or 2; z is 0 to 3; wherein amount of said catalyst is 0.01 to 50 millimoles of molybdenum or tungsten per mole of said norbornene-type monomer or a mixture thereof; wherein weight ratio of said cocatalyst to said catalyst is 200:1 to 1:10; and wherein mole ratio of said halogen source to said catalyst is 20:1 to 1:4 of the halogen to molybdenum or tungsten.

3. Process of claim 2 wherein R in said cocatalyst contains 1 to 6 carbon atoms and is selected from alkyl and phenyl groups; wherein x of said cocatalyst is 3 or 4; wherein said catalyst is selected from

organoammonium molybdates, organoammonium tungstates, and mixtures thereof; wherein amount of said catalyst is 0.1 to 10 millimoles of molybdenum or tungsten; wherein weight ratio of said cocatalyst to said catalyst is 10:1 to 2:1; and wherein mole ratio of said halogen source to said catalyst is 5:1 to 1:1, halogen to molybdenum or tungsten.

4. Process of claim 3 wherein M is selected from tin, lead, silicon and mixtures thereof; wherein z is 0 or 1; and wherein said norbornene-type monomer is selected from substituted and unsubstituted norbornenes, dicyclopentadienes, dihydrodicyclopentadienes, trimers of cyclopentadienes, tetramers of cyclopentadienes, tetracyclododecenes, hexacyclododecenes, ethylidenenorbornenes, vinylnorbornenes, and mixtures thereof, substituents on said monomers are selected from alkyl groups of 1 to 2 carbons.

5. Process of claim 4 including the steps of mixing multiple streams, at least one stream containing said catalyst, at least one stream containing said cocatalyst at least one stream containing said monomer, and at least one stream containing said halogen source; and injecting the mixture into a mold where said ring opening polymerization is conducted; said halogen source is selected from chlorometal compounds containing 2 to 5 chlorine atoms, depending on the valence of said metal in said halogen source, and mixtures thereof.

6. Process of claim 4 wherein said charge also includes up to 20% by weight of one or more monomers devoid of said norbornene group and wherein said catalyst is devoid of phosphorus.

7. Process of claim 5 wherein said metathesis cocatalyst is selected from air-insensitive cocatalysts.

8. Process of claim 7 wherein said cocatalyst is selected from tetraalkyl metal compounds containing 1 to 6 carbons in each alkyl group and trialkyl metal hydrides containing 1 to 6 carbons in each alkyl group wherein said metal is selected from tin, lead, silicon, and mixtures thereof.

9. Process of claim 7 wherein said halogen source is tetrachlorosilane and said process is carried out by reaction injection molding.

10. Process of claim 3 wherein said catalyst is organoammonium molybdate; said cocatalyst is selected from tetraethyltin, tetrabutyltin, tetramethyllead, tetramethylsilane, triethylsilane, and mixtures thereof; and wherein said halogen source is tetrachlorosilane.

11. Process of claim 3 wherein said catalyst is organoammonium tungstate, said cocatalyst is tributyltin hydride, and said halogen source is tetrachlorosilane.

12. Process for preparing a polymer by ring opening polymerization comprising the step of polymerizing a charge comprising a norbornene-type monomer, or a mixture thereof, in the presence of a sufficient amount of a ring-opening catalyst system and also in the presence of a sufficient amount of a halogen source, or a mixture thereof; wherein said norbornene-type monomer contains at least one norbornene group having the following structure

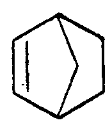

wherein said metathesis catalyst system comprises a catalyst and cocatalyst; wherein said catalyst is selected from organoammonium molybdates, organoammonium tungstates, and mixtures thereof; wherein said cocatalyst is selected from organometal compounds where each of said organic groups contains 1 to 14 carbon atoms, and said metal is selected from tin, lead, silicon, lithium, magnesium, boron, zinc, germanium, and mixtures thereof; and wherein said halogen source is selected from halogen compounds containing sufficient amount of halogen to carry out said polymerization.

13. Process of claim 12 wherein said cocatalyst is selected from organometal compounds having the following structure:

$R_xM_yH_z$

where R is an organic group that contains 1 to 14 carbon atoms and is selected from alkyl, alkenyl, alkoxy, aryl, aryloxy, alkaryl, and saturated and unsaturated cyclic groups, said R is individually selected if there is more than one R group; M is a metal selected from tin, lead, silicon, lithium, magnesium, boron, zinc, germanium, and mixtures thereof; H is hydrogen; x is 1 to 6; y is 1 or 2; z is 0 to 3; wherein amount of said catalyst is 0.01 to 50 millimoles of molybdenum or tungsten per mole of said norbornene-type monomer or a mixture thereof; wherein weight ratio of said cocatalyst to said catalyst is 200:1 to 1:10; and wherein mole ratio of said halogen source to said catalyst is 20:1 to 1:4 of the halogen to molybdenum or tungsten.

14. Process of claim 13 wherein R in said cocatalyst contains 1 to 6 carbon atoms and is selected from alkyl and phenyl groups; wherein x of said cocatalyst is 3 or 4; wherein amount of said catalyst is 0.1 to 10 millimoles of molybdenum or tungsten; wherein weight ratio of said cocatalyst to said catalyst is 10:1 to 2:1;

and wherein mole ratio of said halogen source to said catalyst is 5:1 to 1:1, halogen to molybdenum or tungsten.

15. Process of claim 14 wherein M is selected from tin, lead, silicon and mixtures thereof; wherein z is 0 or 1; and wherein said norbornene-type monomer is selected from substituted and unsubstituted norbornenes, dicyclopentadienes, dihydrodicyclopentadienes, trimers of cyclopentadienes, tetramers of cyclopentadienes, tetracyclododecenes, hexacyclododecenes, ethylidenenorbornenes, vinylnorbornenes, and mixtures thereof, substituents on said monomers are selected from alkyl groups of 1 to 2 carbons.

16. Process for preparing a polymer by ring opening polymerization comprising the step of polymerizing a monomer charge comprising at least one monomer containing at least one norbornene group in the presence of a metathesis catalyst system and also in the presence of a sufficient amount of a halogen source to carry out polymerization of at least one of said monomers; wherein said norbornene group has the following structure

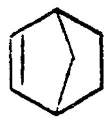

wherein said metathesis catalyst system comprises a catalyst and cocatalyst; wherein said catalyst is devoid of phosphorus and is selected from molybdenum compounds, tungsten compounds, and mixtures thereof; wherein said cocatalyst is selected from organometal hydrides wherein said organo groups are selected from alkyl groups of 1 to 10 carbon atoms, aryl groups of 6 to 14 carbon atoms, and mixtures thereof, and said metal is selected from tin, lead, magnesium, antimony, boron, germanium, and mixtures thereof; and wherein said halogen source is selected from halogen compounds containing sufficient amount of halogen to carry out said polymerization.

17. Process of claim 16 wherein said organo group in said cocatalyst is selected from alkyl groups of 1 to 6 carbons; wherein amount of said catalyst is 0.01 to 50 millimoles of molybdenum or tungsten per mole of total monomer; wherein weight ratio of said cocatalyst to said catalyst is 200:1 to 1:10; and wherein weight ratio of said halogen source to said catalyst is 20:1 to 1:4 of the halogen to molybdenum or tungsten.

18. Process of claim 17 wherein said organo group in said cocatalyst is selected from alkyl groups of 1 to 6 carbons; wherein amount of said catalyst is 0.1 to 10 millimoles of molybdenum or tungsten per mole of total monomer; wherein weight ratio of said cocatalyst to said catalyst is 10:1 to 2:1; and wherein mol ratio of said halogen source to said catalyst is 5:1 to 1:1 of said halogen to molybdenum or tungsten.

19. Process of claim 18 wherein said halogen source is selected from metal halides and mixtures thereof; wherein said metal in said metal halides is selected from tin, antimony, germanium, and mixtures thereof; and wherein there is 1 to 4 halogen atoms in said metal halides, depending on the valence of the metal.

20. Process of claim 19 wherein said monomers are selected from substituted and unsubstituted norbornenes, dicyclopentadienes, dihydrodicyclopentadienes, trimers of cyclopentadienes, tetramers of cyclopentadienes, tetracyclododecenes, hexacyclododecenes, ethylidenenorbornenes, vinylnorbornenes, and mixtures thereof; wherein said substituents on said substituted norbornene monomers are selected from alkyl and alkenyl groups of 1 to 20 carbons, saturated and unsaturated cyclic groups of 3 to 12 carbon atoms which can be formed with at least one ring carbon atom, and mixtures thereof.

21. Process of claim 19 including the steps of mixing multiple streams containing said metathesis catalyst system, and said halogen source, and injecting said mixture into a mold wherein said ring opening polymerization is conducted; said substituents on said monomers are selected from alkyl groups of 1 to 2 carbons.

22. Process of claim 19 wherein said cocatalyst is selected from trialkyltin hydrides containing 1 to 6 carbons in each alkyl group; wherein said halogen source is selected from chlorometal compounds containing 2 to 4 chlorine atoms, depending on the valence of said metal; wherein said catalyst is selected from organoammonium molybdates, organoammonium tungstates, and mixtures thereof; wherein said step of polymerizing is carried out in absence of a solvent; and wherein said monomer is selected from dicyclopentadiene, methylnorbornene, vinylnorbornene, trimer of cyclopentadiene, tetramers of cyclopentadiene, methyltetracyclododecene, ethylidenenorbornene, and mixtures thereof.

23. Process of claim 21 wherein said cocatalyst is tributyltin hydride, said halogen source is tetrachlorosilane, and said catalyst is devoid of phosphorus.

24. Process of claim 20 wherein said monomer charge also includes up to 20% by weight of one or more monomers devoid of a norbornene group.

25. Process of claim 24 wherein said cocatalyst is selected trialkylmetal hydrides, tetraalkylmetals, and mixtures thereof, containing 1 to 6 carbons in each alkyl group; and wherein said metal is selected from tin, lead, silicon, and mixtures thereof.

26. Process of claim 25 wherein said cocatalyst is selected from air-insensitive cocatalysts.

27. Polymer produced by the process of claim 3.

28. Polymer produced by the process of claim 21 that is transparent.

29. Composition of matter comprising at least one norbornene-type monomer containing at least one norbornene group having the following structure

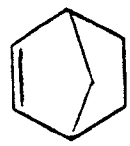 ;

and cocatalyst dissolved in said norbornene-type monomer, said cocatalyst is selected from organometal compounds where each of said organic groups contains 1 to 14 carbon atoms and said metal selected from tin, lead, silicon, lithium, magnesium, boron, zinc, germanium, and mixtures thereof; and wherein said halogen source is selected from halogen compounds containing sufficient amount of halogen to carry out said polymerization.

30. Composition of claim 29 wherein said cocatalyst is selected from organometal compounds having the following structure:

$R_xM_yH_z$

where R is an organic group that contains 1 to 14 carbon atoms and is selected from alkyl, alkenyl, alkoxy, aryl, aryloxy, alkaryl, and saturated and unsaturated cyclic groups, said R is individually selected if there is more than one R group; M is a metal selected from tin, lead, silicon, lithium, magnesium, boron, zinc, germanium, and mixtures thereof; H is hydrogen; x is 1 to 6; y is 1 or 2; and z is 0 to 3.

31. Composition of claim 30 wherein R in said cocatalyst contains 1 to 6 carbon atoms and is selected from alkyl and phenyl groups; wherein x of said cocatalyst is 3 or 4; and wherein between 0.1 and 100 millimoles of metal in said cocatalyst is present per mole of said monomer.

32. Composition of claim 31 wherein M is selected from tin, lead, silicon and mixtures thereof; wherein z is 0 or 1; and wherein said norbornene-type monomer is selected from substituted and unsubstituted norbornenes, dicyclopentadienes, dihydrodicyclopentadienes, trimers of cyclopentadienes, tetramers of cyclopentadienes, tetracyclododecenes, hexacyclododecenes, ethylidenenorbornenes, vinylnorbornenes, and mixtures thereof, substituents on said monomers are selected from alkyl groups of 1 to 2 carbons.

33. Composition of claim 31 wherein said halogen source is selected from chlorometal compounds containing 2 to 5 chlorine atoms, depending on the valence of said metal in said halogen source, and mixtures thereof; wherein said charge also includes up to 20% by weight of one or more monomers devoid of said norbornene group; and wherein said cocatalyst is selected from air-insensitive cocatalysts.

34. Composition of claim 33 wherein said cocatalyst is selected from tetraalkyl metal compounds containing 1 to 6 carbons in each alkyl group and trialkyl metal hydrides containing 1 to 6 carbons in each alkyl group wherein said metal is selected from tin, lead, silicon, and mixtures thereof, the mole ratio of said cocatalyst to said monomer is 0.2 to 50 millimoles per mole of said monomer, the mol ratio of said cocatalyst on metal basis to said halogen source is 1-10/0.2-5.

35. Composition of claim 34 wherein said halogen source is tetrachlorosilane.

36. Process of making cross-linked substantially transparent polymer comprising combining a plurality of reactant streams to form a polymerization solution, one stream containing a catalyst component of a metathesis catalyst system, another reactant stream containing a cocatalyst of a metathesis system, at least one of said reactant streams containing a halogen source, and at least one of said reactant streams containing at least one norbornene-type monomer having at least one norbornene group of the following structure:

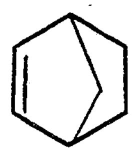 ;

wherein said catalyst component is selected from molybdenum compounds, tungsten compounds devoid of a hindered phenoxy group, and mixtures thereof; wherein said cocatalyst is selected from organometal compounds where each of said organic groups contains 1 to 14 carbon atoms, and said metal is selected from tin, lead, silicon, lithium, magnesium, boron, zinc, germanium, and mixtures thereof; and wherein said halogen source is selected from halogen compounds containing sufficient amount of halogen to carry out said polymerization.

37. Process of claim 36 wherein said cocatalyst is selected from organometal compounds having the following structure:

$R_xM_yH_z$

where R is an organic group that contains 1 to 14 carbon atoms and is selected from alkyl, alkenyl, alkoxy, aryl, aryloxy, alkaryl, and saturated and unsaturated cyclic groups, said R is individually selected if there is more than one R group; M is a metal selected from tin, lead, silicon, lithium, magnesium, boron, zinc, germanium, and mixtures thereof; H is hydrogen; x is 1 to 6; y is 1 or 2; z is 0 to 3; wherein amount of said catalyst is 0.01 to 50 millimoles of molybdenum or tungsten per mole of said norbornene-type monomer or a mixture thereof; wherein weight ratio of said cocatalyst to said catalyst is 200:1 to 1:10; and wherein mole ratio of said halogen source to said catalyst is 20:1 to 1:4 of the halogen to molybdenum or tungsten.

38. Process of claim 37 wherein R in said cocatalyst contains 1 to 6 carbon atoms and is selected from alkyl and phenyl groupss; wherein x of said cocatalyst is 3 or 4; wherein said catalyst is selected from organoammonium molybdates, organoammonium tungstates devoid of halogen, and mixtures thereof; wherein amount of said catalyst is 0.1 to 10 millimoles of molybdenum or tungsten; wherein weight ratio of said cocatalyst to said catalyst is 10:1 to 2:1; and wherein mole ratio of said halogen source to said catalyst is 5:1 to 1:1, halogen to molybdenum or tungsten.

39. Process of claim 38 wherein M is selected from tin, lead, silicon and mixtures thereof; wherein z is 0 or 1; and wherein said norbornene-type monomer is selected from substituted and unsubstituted norbornenes, dicyclopentadienes, dihydrodicyclopentadienes, trimers of cyclopentadienes, tetramers of cyclopentadienes, tetracyclododecenes, hexacyclododecenes, ethylidenenorbornenes, vinylnorbornenes, and mixtures thereof, substituents on said monomers are selected from alkyl groups of 1 to 2 carbons.

40. Process of claim 39 wherein said halogen source is selected from chlorometal compounds containing 2 to 5 chlorine atoms, depending on the valence of said metal in said halogen source, and mixtures thereof; wherein said charge also includes up to 20% by weight of one or more monomers devoid of said norbornene group; and wherein said metathesis cocatalyst is selected from air-insensitive cocatalysts.

41. Process of claim 40 wherein said cocatalyst is selected from tetraalkyl metal compounds containing 1 to 6 carbons in each alkyl group and trialkyl metal hydrides containing 1 to 6 carbons in each alkyl group; and wherein said metal in said cocatalyst is selected from tin, lead, silicon, and mixtures thereof.

42. Process of claim 41 wherein said catalyst is organoammonium molybdate; said cocatalyst is selected from tetraethyltin, tetrabutyltin, tetramethyllead, tetramethylsilane, triethylsilane, and mixtures thereof; and said halogen source is tetrachlorosilane.

43. Process of making cross-linked substantially transparent polymer comprising combining a plurality of reactant streams to form a polymerization solution, one stream containing a catalyst component of a metathesis catalyst system, another reactant stream containing a cocatalyst of a metathesis system, at least one of said reactant streams containing a halogen source, and at least one of said reactant streams containing at least one norbornene-type monomer having at least one norbornene group of the following structure:

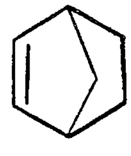 ;

wherein said catalyst component is selected from organoammonium molybdates, organoammonium tungstates, and mixtures thereof; wherein said cocatalyst is selected from organometal compounds where each of said organic groups contains 1 to 14 carbon atoms, and said metal is selected from tin, lead, silicon, lithium, magnesium, boron, zinc, germanium, and mixtures thereof; and wherein said halogen source is selected from halogen compounds containing sufficient amount of halogen to carry out said polymerization.

44. Process of claim 43 wherein said cocatalyst is selected from organometal compounds having the following structure:

$R_xM_yH_z$

where R is an organic group that contains 1 to 14 carbon atoms and is selected from alkyl, alkenyl, alkoxy, aryl, aryloxy, alkaryl, and saturated and unsaturated cyclic groups, said R is individually selected if there is more than one R group; M is a metal selected from tin, lead, silicon, lithium, magnesium, boron, zinc, germanium, and mixtures thereof; H is hydrogen; x is 1 to 6; y is 1 or 2; z is 0 to 3; wherein amount of said catalyst is 0.01 to 50 millimoles of molybdenum or tungsten per mole of said norbornene-type monomer or a mixture thereof; wherein weight ratio of said cocatalyst to said catalyst is 200:1 to 1:10; and wherein mole ratio of said halogen source to said catalyst is 20:1 to 1:4 of the halogen to molybdenum or tungsten.

45. Process of claim 44 wherein R in said cocatalyst contains 1 to 6 carbon atoms and is selected from alkyl and phenyl groups; wherein x of said cocatalyst is 3 or 4; wherein amount of said catalyst is 0.1 to 10 millimoles of molybdenum or tungsten; wherein weight ratio of said cocatalyst to said catalyst is 10:1 to 2:1; and wherein mole ratio of said halogen source to said catalyst is 5:1 to 1:1, halogen to molybdenum or tungsten.

46. Process of claim 45 wherein M is selected from tin, lead, silicon and mixtures thereof; wherein z is 0 or 1; and wherein said norbornene-type monomer is selected from substituted and unsubstituted norbornenes, dicyclopentadienes, dihydrodicyclopentadienes, trimers of cyclopentadienes, tetramers of cyclopentadienes, tetracyclododecenes, hexacyclododecenes, ethylidenenorbornenes, vinylnorbornenes, and mixtures thereof, substituents on said monomers are selected from alkyl groups of 1 to 2 carbons.

47. Process of claim 46 wherein said halogen source is selected from chlorometal compounds containing 2 to 5 chlorine atoms, depending on the valence of said metal in said halogen source, and mixtures thereof; wherein said charge also includes up to 20% by weight of one or more monomers devoid of said norbornene group; and wherein said metathesis cocatalyst is selected from air-insensitive cocatalysts.

48. Process of claim 47 wherein said cocatalyst is selected from tetraalkyl metal compounds containing 1 to 6 carbons in each alkyl group and trialkyl metal hydrides containing 1 to 6 carbons in each alkyl group; and wherein said metal in said cocatalyst is selected from tin, lead, silicon, and mixtures thereof.

49. Transparent cross-linked polymer product comprising metathesis catalyst polymerized units of at least one norbornene-type monomer having at least one norbornene group of the following structure

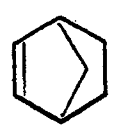 ;

said polymer product comprising cross-linked substantially transparent polymer having percent haze of less than 25%, said metathesis catalyst comprising organometal compounds wherein the metal is selected from tin, lead, silicon, lithium, magnesium, boron, zinc, germanium, and mixtures thereof.

50. Product of claim 49 wherein said organometal compounds are defined as follows:

$R_xM_yH_z$

where R is an organic group that contains 1 to 6 carbon atoms and is selected from alkyl and phenyl groups; M is selected from tin, lead, silicon and mixtures thereof; x is 3 or 4; z is 0 or 1; and wherein said norbornene-type monomer is selected from polar and nonpolar substituted and unsubstituted norbornenes, dicyclopentadienes, dihydrodicyclopentadienes, trimers of cyclopentadienes, tetramers of cyclopentadienes, tetracyclododecenes, hexacyclododecenes, ethylidenenorbornenes, vinylnorbornenes, and mixtures thereof.

51. Product of claim 50 wherein said organometal compounds are selected from tetraalkyl metal compounds, trialkyl metal hydrides, and mixtures thereof, each of said alkyl groups in said cocatalysts having 1 to 6 carbon atoms.

52. Product of claim 51 wherein said organometal compounds are selected from tetraethyltin, tetrabutyltin, tetramethyllead, tetramethylsilane, triethylsilane, and mixtures thereof.

53. Product of claim 50 wherein said metathesis catalyst also includes organoammonium compoud selected from organoammonium molybdates, organoammonium tungstates, and mixtures thereof.

54. Product of claim 53 wherein said organoammonium compounds are selected from the compounds defined by the following structural formulas:

$[R_4N]_{(2y-6x)}M_xO_y$ and $[R^1NH]_{(2y-6x)}M_xO_y$

where each R and $R^1$ group is independently selected from hydrogen, alkyl and alkylene groups each containing 1 to 20 groups, and cycloaliphatic groups each containing 5 to 16 carbon atoms, the sum of all carbon atoms represented by said R groups is 20 to 72 and the sum of all carbon atoms represented by said $R^1$ groups is 15 to 54; M is selected from molybdenum (VI) and tungsten (VI); and x and y represent the number of M and O atoms in the molecule.